# EUROPÄISCHE PATENTSCHRIFT

(11) **EP 0 848 263 B1**
(45) Veröffentlichungstag und Bekanntmachung des Hinweises auf die Patenterteilung: **14.05.2003**
(21) Anmeldenummer: 97117994.0
(22) Anmeldetag: 17.10.1997
(51) Int. Cl.: G01T 1/08, G01N 21/59, G03B 1/32, G03B 1/44, H04N 1/00

(54) **Bildanalytisches Messsystem für Dosimeterfilme**
Image analysis measurement system for dosimeter films
Système de mesure à traitement d'images pour des films dosimétriques

(30) Priorität: 11.12.1996 DE 19651381
(43) Veröffentlichungstag der Anmeldung: 17.06.1998
(73) Patentinhaber: GSF - Forschungszentrum für Umwelt und Gesundheit GmbH, 85764 Oberschleissheim (DE)
(72) Erfinder: Brand, Norbert, 81241 München (DE)

(56) Entgegenhaltungen:
- WO-A-97/17595
- US-A- 5 218 463
- KEPKA ET AL: "A SOLID-STATE VIDEO FILM DOSIMETRY SYSTEM" PHYSICS IN MEDICINE & BIOLOGY, Bd. 28, Nr. 4, 1983, Seiten 421-426, XP002100735

## Beschreibung

Die Erfindung betrifft ein bildanalytisches Meßsystem für Dosimeterfilme nach dem Oberbegriff des Patentanspruchs 1, wie es aus der DIN 6816, 8.2 bekannt ist.

In der amtlichen Meßstelle werden monatlich ca. 140.000 Filmdosimeter ausgewertet, wobei jeder Film zur Bestimmung der optischen Dichte der Filterfelder per Hand mit einem Densitometer gemessen werden muß. Zusätzlich muß der Bearbeiter den gerade zu bearbeitenden Film auf eventuell vorhandene Besonderheiten wie Kontaminationen, Lichteinfall, Verklebungen etc. visuell prüfen. Ebenso muß manuell die vom benutzten Prozeßrechner ausgegebene Filmnummer mit der auf dem Film befindlichen auf Übereinstimmung kontrolliert werden. Nachdem der Strahlenschutz "greift", sind ca. 80 - 90 % der Filme unbestrahlt, ca. 5 - 8 % wenig bestrahlt, so daß nur der Rest photometriert werden muß. Da die Filme zur Maschinenentwicklung an ein Transportband geklebt sind, ließe sich dieser Arbeitsvorgang weitgehend automatisieren. Geeignete Automaten sind am Markt derzeit nicht erhältlich.

Aufgabe der Erfindung ist es, ein bildanalytisches Meßsystem der e. g. Art so auszugestalten, daß eine automatische Auswertung der Filme möglich wird.

Gelöst wird diese Aufgabe durch die Merkmale des Patentanspruchs 1. Die abhängiger Ansprüche beschreiben vorteilhafte Ausgestaltungen der Erfindung.

Ein besonderer Vorteil der erfindungsgemäßen Vorrichtung besteht darin, daß entwickelte Filme automatisch transportiert, in die Meßlage positioniert, identifiziert und gemessen werden können, wobei solche mit darauf befindlichen Besonderheiten und bei Meßbereichsüberschreitung für weitere Untersuchungen gekennzeichnet werden können.

Die Erfindung wird im folgenden anhand eines Ausführungsbeispiels mit Hilfe der Figuren näher erläutert. Dabei zeigt
Figur 1 eine schematische Darstellung der Meßanordnung und
Figur 2 die schematische Darstellung des Führungselementes für die an dem Transportband befestigten Filme.

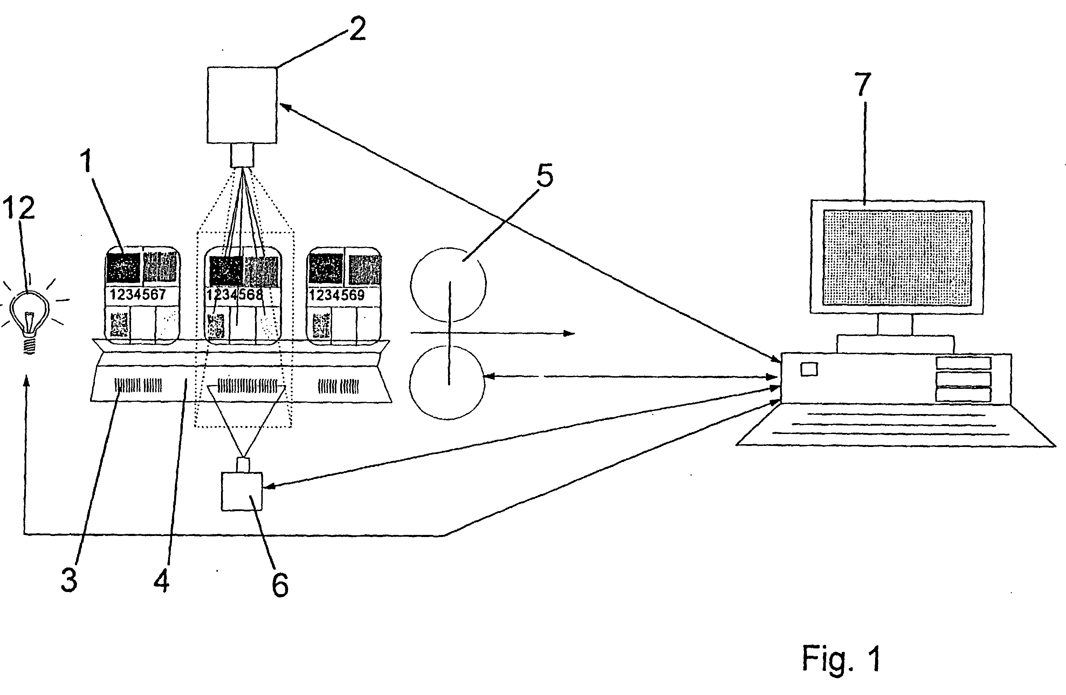

Die Fig. 1 zeigt die Filme 1, die an dem Transportband 4 befestigt sind. Die Filme 1 zeigen die unterschiedlich belichteten Felder und die Nummernkodierung. Das Transportband 4 trägt die entsprechenden Filmkennzeichnungen 3. Zur Auswertung sind Videokamera 2 und Codescanner 6 über den Filmen dargestellt, wobei der Codescanner 6 hier der Erkennung der Filmkennzeichnung 3 dient und die Videokamera 2 der Positionierungssteuerung dient und die optische Dichte des Films 1 aufnimmt. Die Signale von Videokamera 2 und Codescanner 3 werden vom Prozeßrechner 7 ausgewertet. Die Videokamera 2 kann auch die Erkennung der Filmkennzeichnung übernehmen. Dies erfordert jedoch einen höheren Softwareaufwand für den Prozeßrechner. Lichtquelle 12 und Antriebsrollen 5 werden weiter unten erläutert.

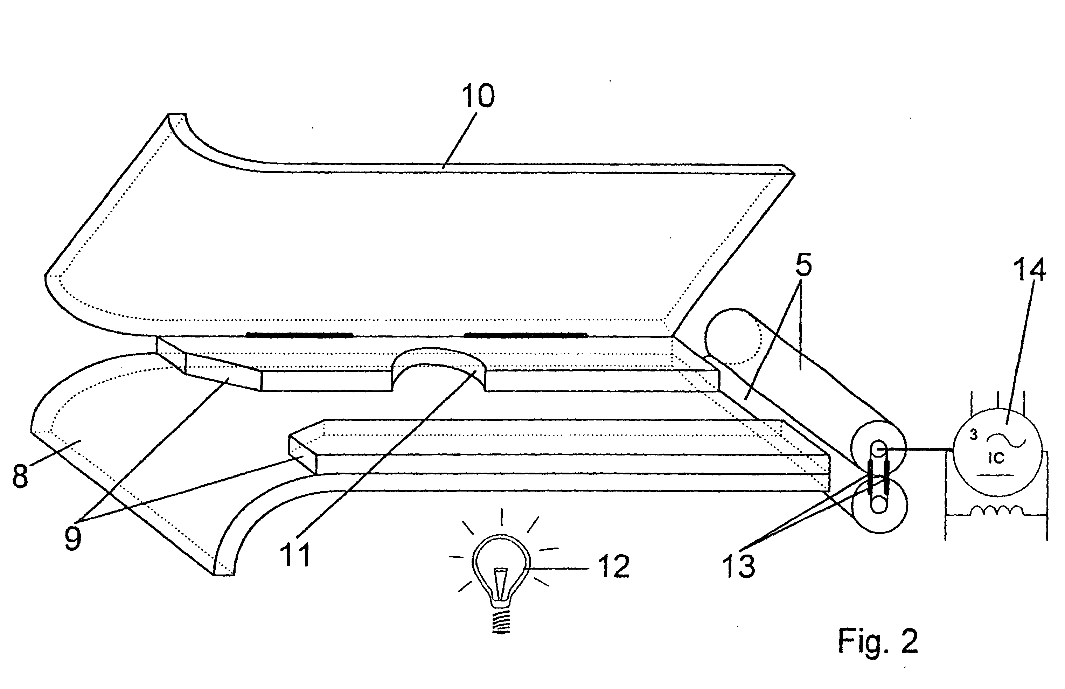

Das Führungselement von Fig. 2 besteht aus der transparenten Grundplatte 8 auf der die beiden Seitenführungen 9 befestigt sind, zwischen denen das Transportband 4 mit den Filmen 1 geführt wird. Die Befestigung kann beispielsweise durch Verkleben oder Verschrauben erfolgen. Die eine der beiden Seitenführungen 9 weist eine Aussparung 11 auf, die der Normierung der gemessenen optischen Dichten dient. Nur bei Verwendung eines Codescanners 6 ist die Grundplatte 8 mit einer lichtundurchlässigen, in Richtung des Codescanners 6 weißen Folie im Durchlichtbildbereich der Filmkennzeichnung 3 überklebt. Da das Transportband transparent ist, erfolgt die Codelesung mittels Kamera im Durchlichtbetrieb. Der Scanner arbeitet mit eigener Lichtquelle (z. B. Laser) auf Reflexionsbasis, wobei das Durchlicht ausgeschlossen werden muß.

Mit Hilfe des durchsichtigen Deckels 10 kann das Führungselement verschlossen werden, so daß zwischen Trägerplatte 8, den Seitenführungen 9 und dem Deckel 10 ein Führungskanal für das Transportband 4 mit den Filmen 1 entsteht. Der Deckel 10 ist hier beispielsweise mit einem Scharnier an einer der Seitenführungen 9 befestigt.

Die Videokamera 2 (hier nicht dargestellt) überwacht von oben den Bereich dieses Führungskanals bei der Aussparung 11 zusammen mit dieser Aussparung. Durch die Biegungen von Trägerplatte 8 und Deckel 10 auf der linken Seite wird im Zusammenwirken mit den Anschrägungen der Seitenführungen 9, ebenfalls links, eine Selbstjustierung des filmbestückten Transportbandes 4 erreicht.

Zum Weitertransport des filmbestückten Transportbandes 4 und zur genauen Positionierung des Films 1 an den Meßort dienen die Antriebsrollen 5 an der rechten Seite des Führungselements. Diese werden mit Hilfe eines Motors 14, hier ein Schrittmotor, gegenläufig synchron angetrieben. Die Antriebsrollen 5 sind gegeneinander beweglich gelagert und werden mit Hilfe von Spannfedern 13 gegeneinander gedrückt. Durch die bewegliche Lagerung kann das Transportband 4 leicht zwischen die beiden Antriebsrollen geführt werden. Durch den Andruck mittels der Spannfedern 13 entsteht die nötige Traktion zwischen dem Transportband 4 und den Antriebsrollen 5. Unter dem Führungselement ist die Lichtquelle 12 so angeordnet, daß das von der Videokamera erfaßte Feld voll und gleichmäßig ausgeleuchtet ist. Dazu wird vorzugsweise eine Kaltlichtquelle, die intensitätsstabilisiert ist, verwendet.

Zur Auswertung eines mit Filmen bestückten Transportbandes 4, das erste Stück des Bandes sollte nicht mit Filmen bestückt sein, wird das Transportband 4 von links bei geöffnetem Deckel 10 durch den Führungskanal bis zu den Transportrollen 5 geführt und zwischen diese geklemmt. Dazu werden die beiden Rollen gegen die Spannfedern 13 auseinander gedrückt. Dann wird der Deckel 10 geschlossen und der Prozeßrechner übenimmt, gesteuert von den Bildern der Videokamera den Weitertransport und die Auswertung der Filme mit Hilfe einer hier nicht näher beschriebenen Auswertesoftware.

### Bezugszeichenliste:

- 1: Film
- 2: Videokamera
- 3: Filmkennzeichnung
- 4: Transportband mit angeklebten Filmen
- 5: Antriebsrollen
- 6: Codescanner
- 7: Prozeßrechner
- 8: Trägerplatte
- 9: Seitenführungen
- 10: Deckel
- 11: Aussparung
- 12: Lichtquelle
- 13: Spannfedern
- 14: Motor

## Patentansprüche

1. Bildanalytisches Meßsystem für Dosimeterfilme, welche auf einem Transportband befestigt sind, wobei das Transportband eine Filmkennzeichnung trägt, bestehend aus einer Lichtquelle zur Durchleuchtung des Films, einer Mechanik zum Filmtransport und einer optosensitiven Meßeinrichtung zur Erfassung der Filmposition, der Filmkennzeichnung auf dem Transportband und der optischen Dichten des entwickelten Films, **gekennzeichnet durch** folgende weitere Merkmale:
a) ein Führungselement für die auf dem Transportband (4) befestigten Filme (1), bestehend aus einer transparenten Trägerplatte (8), zwei Seitenführungen (9) und einem transparenten Deckel (10), wobei eine der zwei Seitenführungen (9) eine Aussparung (11) zur Erfassung des Referenzlichtes aufweist, und
b) zwei **durch** einen Schrittmotor (14) gegenläufig synchron angetrieben Antriebsrollen (5), wobei die beiden Antriebsrollen (5) mit Federelementen (13) gegeneinander gedrückt werden.

2. Bildanalytisches Meßsystem nach Anspruch 1, **dadurch gekennzeichnet, daß** die optosensitive Meßeinrichtung eine Videokamera (2) ist, wobei die Videokamera (2) einen Bereich erfaßt, der größer ist als der auszuwertende Film (1) und das Transportband (4) und die Aussparung (11) mit einschließt.

3. Bildanalytisches Meßsystem nach Anspruch 1 oder 2, **dadurch gekennzeichnet, daß** die Lichtquelle (12) intensitätsstabilisiert ist.

4. Bildanalytisches Meßsystem nach einem der Ansprüche 1 bis 3, **dadurch gekennzeichnet, daß** die Seitenführungen (9) angeschrägt und die Trägerplatte (8) und/oder der Deckel (10) einseitig nach außen gebogen sind, wobei diese Anschrägungen und Abbiegungen eine Selbstjustierung des Transportbandes (4) bewirken.

5. Bildanalytisches Meßsystem nach einem der Ansprüche 1 bis 4, **gekennzeichnet durch** einen Prozeßrechner (7) zur Antriebssteuerung der Antriebsrollen (5) und zur Auswertung der Signale der Kamera (2).

6. Bildanalytisches Meßsystem nach einem der Ansprüche 1 bis 5, **gekennzeichnet durch** einen die Betriebssoftware vereinfachenden Codescanner (6) zum Erfassen der Filmkennzeichnung (3) auf dem Transportband (4), wobei die Signale des Codescanners (6) vom Prozeßrechner (7) ausgewertet werden.

## Claims

1. Image-analytical measuring system for dosimeter films, which are mounted on a conveyor belt, the conveyor belt carrying a film identification, said system comprising a light source for illuminating the film, a mechanism for conveying film and an optosensitive measuring apparatus for detecting the position of the film, the film identification on the conveyor belt and the optical densities of the developed film, **characterised by** the following additional features:
a) a guide member for guiding the films (1), which are mounted on the conveyor belt (4), said member comprising a transparent carrier plate (8), two lateral guide means (9) and a transparent cover (10), one of the two lateral guide means (9) having a cutaway portion (11) for detecting the reference light, and
b) two drive rollers (5), which are driven synchronously in opposite directions by a stepping motor (14), the two drive rollers (5) being urged towards each other by resilient members (13).

2. Image-analytical measuring system according to claim 1, **characterised in that** the optosensitive measuring apparatus is a video camera (2), the video camera (2) detecting a region which is greater than the film (1) to be evaluated and includes the conveyor belt (4) and the cutaway portion (11).

3. Image-analytical measuring system according to claim 1 or 2, **characterised in that** the light source (12) is intensity-stabilised.

4. Image-analytical measuring system according to one of claims 1 to 3, **characterised in that** the lateral guide means (9) are bevelled, and the carrier plate (8) and/or the cover (10) are/is curved unilaterally outwardly, these bevelled and curved portions causing a self-adjustment of the conveyor belt (4).

5. Image-analytical measuring system according to one of claims 1 to 4, **characterised by** a processing computer (7) for controlling the drive rollers (5) and for evaluating the signals of the camera (2).

6. Image-analytical measuring system according to one of claims 1 to 5, **characterised by** a code scanner (6), which simplifies the operational software, for detecting the film identification (3) on the conveyor belt (4), the signals of the code scanner (6) being evaluated by the processing computer (7).

## Revendications

1. Système de mesure de films dosimétriques par analyse d'image (traitement d'images), ces films étant fixés sur une bande transporteuse qui comporte une référence de film, ce système comprenant une source lumineuse pour éclairer le film, un mécanisme pour assurer le transport du film et une installation de mesure auto sensible pour saisir la position du film, la référence du film sur la bande transporteuse et les densités optiques du film développé,
**caractérisé par**
a) un élément de guidage pour les films (1) fixés sur la bande transporteuse (4), cet élément étant formé sur une plaque de support (8) transparente, de deux guides latéraux (9) et d'un couvercle transparent (10),
l'un des deux guides latéraux (9) ayant une découpe (11) pour détecter la lumière de référence, et
b) deux galets d'entraînement (5) entraînés en synchronisme en sens opposé par un moteur pas à pas (14), les deux galets d'entraînement (5) étant pressés l'un contre l'autre par des éléments de ressort (13).

2. Système de mesure par analyse d'image selon la revendication 1,
**caractérisé en ce que**
l'installation de mesure opto-sensible est une caméra vidéo (2), cette caméra vidéo (2) saisissant une plage supérieure à celle du film (1) à exploiter, englobant la bande transporteuse (4) et la découpe (11).

3. Système de mesure par analyse d'images selon les revendications 1 ou 2,
**caractérisé en ce que**
l'intensité de la source lumineuse (12) est stabilisée.

4. Système de mesure par analyse d'images selon l'une des revendications 1 à 3,
**caractérisé en ce que**
les guides latéraux (9) sont en biais et la plaque (8) et/ou le couvercle (10) sont recourbés d'un coté vers l'extérieur, ces surfaces inclinées et parties cintrées produisant l'auto-ajustage de la bande transporteuse (4).

5. Système de mesure par analyse d'images selon l'une des revendications 1 à 4,
**caractérisé par**
un calculateur de procédés (7) pour commander l'entraînement des galets d'entraînement (5) et pour exploiter les signaux de la caméra (2).

6. Système de mesure par analyse d'images selon l'une des revendications 1 à 5,
**caractérisé par**
un scanner de code (6') simplifiant le programme de fonctionnement, pour saisir la référence de film (3) sur la bande transporteuse (4), les signaux du scanner de code (6) étant exploités par le calculateur de procédés (7).
